# EUROPEAN PATENT APPLICATION

(11) **EP 4 575 633 A1**
(43) Date of publication of application: **25.06.2025**
(21) Application number: 23854801.0
(22) Date of filing: 03.08.2023
(51) Int. Cl.: G03B 15/02, G03B 15/05

(54) **CAMERA DEVICE**

(30) Priority: 17.08.2022 JP 2022130266
(71) Applicant: Nidec Precision Corporation, Tokyo 174-8550 (JP)
(72) Inventor: KIRIHARA Takehisa, Tokyo 174-8550 (JP)
(74) Representative: Osterhoff, Utz
(86) International application number: PCT/JP2023/028372
(87) International publication number: WO 2024/038766

(57) **Abstract**

A camera with a simple and compact structure can emit light using a discharge tube. A camera (1) includes a circuit board (10) including a contact (14) connected to a trigger coil (12), a discharge tube (22) that can discharge electricity, a housing (30) accommodating the discharge tube (22), a reflector (40) being conductive, urged toward the housing (30), and attached to the housing (30), and a wire (50) having an end electrically connected to the contact (14) on the circuit board (10) and a distal end (52) with an exposed conductor. The housing (30) is attached to the circuit board (10). The housing (30) includes a receiving portion (38) receiving the reflector (40), and a sidewall (32A, 32B) located lateral to the receiving portion (38) and extending perpendicular to the circuit board (10). The sidewall (32B) of the housing (30) has a cutout (61) guiding the wire (50) inside the housing (30) and holding the wire (50) to have the distal end (52) of the wire (50) held between the reflector (40) and the receiving portion (38).

## Description

### FIELD

The present invention relates to a camera, and particularly, to a camera that emits light using an electric discharge in a discharge tube as a source of light.

### BACKGROUND

A known camera flash uses an electric discharge in a discharge tube as a source of light (refer to, for example, Patent Literature 1). Such a flash typically includes a circuit that supplies charge to both electrodes of the discharge tube and a trigger electrode that triggers an electric discharge in the discharge tube. A camera with such a flash thus tends to have complex circuit configuration and a larger structure.

### CITATION LIST

### PATENT LITERATURE

Patent Literature 1: Japanese Unexamined Patent Application Publication No. 2003-107565

### BRIEF SUMMARY

### TECHNICAL PROBLEM

In response to the above issue, one or more aspects of the present invention are directed to a camera with a simple and compact structure that can emit light using a discharge tube.

### SOLUTION TO PROBLEM

A camera according to one aspect of the present invention with a simple and compact structure can emit light using a discharge tube. The camera includes a circuit board including a contact connected to a trigger element, a discharge tube configured to discharge electricity, a housing accommodating the discharge tube, a reflector being conductive, urged toward the housing, and attached to the housing, and a wire having a first end electrically connected to the contact on the circuit board and a second end with an exposed conductor. The housing is attached to the circuit board. The housing includes a receiving portion receiving the reflector, and a sidewall located lateral to the receiving portion and extending perpendicular to the circuit board. The sidewall of the housing includes a first holder guiding the wire inside the housing and holding the wire to have the second end of the wire held between the reflector and the receiving portion.

### BRIEF DESCRIPTION OF DRAWINGS

FIG. 1 is a perspective view of a camera according to one embodiment of the present invention.
FIG. 2A is a schematic front view of a circuit board and a light emitter unit included in the camera shown in FIG. 1.
FIG. 2B is a plan view of the circuit board and the light emitter unit in FIG. 2A.
FIG. 2C is a rear view of the circuit board and the light emitter unit in FIG. 2A.
FIG. 3 is an exploded perspective view of the circuit board, the light emitter unit, and a flash cover included in the camera shown in FIG. 1.
FIG. 4A is a perspective view of a housing of the light emitter unit shown in FIG. 2A.
FIG. 4B is a front view of the housing in FIG. 4A.
FIG. 4C is a left side view of the housing in FIG. 4A.
FIG. 4D is a cross-sectional view taken along line A-A in FIG. 4B.
FIG. 5A is a front view of a reflector in the light emitter unit shown in FIG. 2A.
FIG. 5B is a cross-sectional view taken along line B-B in FIG. 5A.
FIG. 6 is a partial cross-sectional view of the circuit board and the light emitter unit in FIG. 2A.

### DETAILED DESCRIPTION

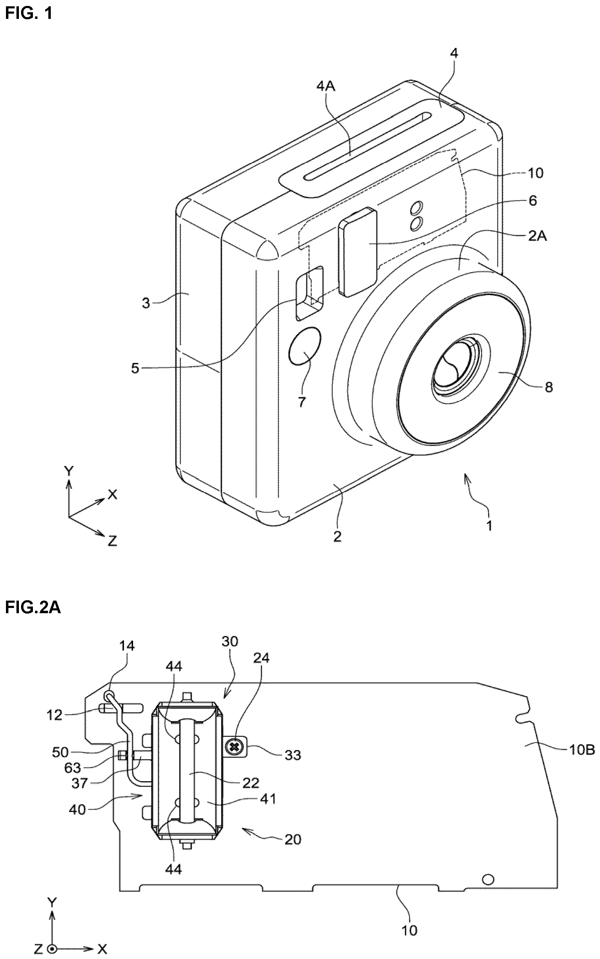

A camera according to one or more embodiments of the present invention will now be described in detail with reference to FIGs. 1 to 6. In FIGs. 1 to 6, like reference numerals denote like or corresponding components. Such components will not be described repeatedly. In FIGs. 1 to 6, the scale and dimensions of each component may be exaggerated, or one or more components may not be shown. Unless otherwise specified, the terms such as first and second will be used simply to distinguish the components and will not represent a specific order or sequence.

FIG. 1 is a perspective view of a camera 1 according to one embodiment of the present invention. The camera 1 according to the present embodiment is, for example, a camera that uses a photographic film to be automatically developed after photographing (instant camera), although the technique according to one or more embodiments of the present invention is also applicable to cameras other than such an instant camera. As shown in FIG. 1, the camera 1 includes a front cover 2, a rear cover 3 attached to the rear of the front cover 2, a top cover 4 sandwiched between the front cover 2 and the rear cover 3, and a lens barrel 8 accommodated in a cylindrical portion 2A of the front cover 2. The front cover 2 includes a viewfinder 5. A flash cover 6 is located adjacent to the viewfinder 5.

A release button 7 is located adjacent to the viewfinder 5 in the negative Z-direction. The top cover 4 has an ejection slit 4A elongated in the X-direction, through which a developed photographic film is ejected after photographing. The lens barrel 8 in the present embodiment is extendable in the Z-direction. The front cover 2 and the rear cover 3 define an internal space that accommodates a circuit board 10 (described later).

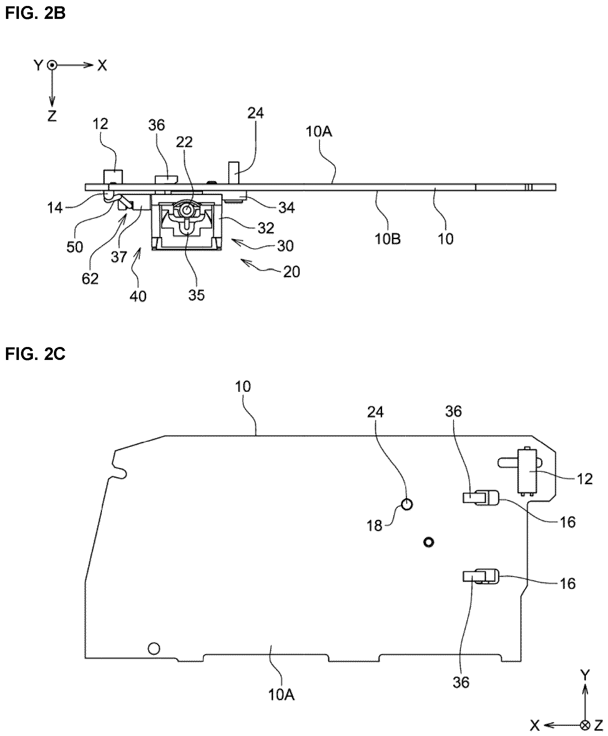

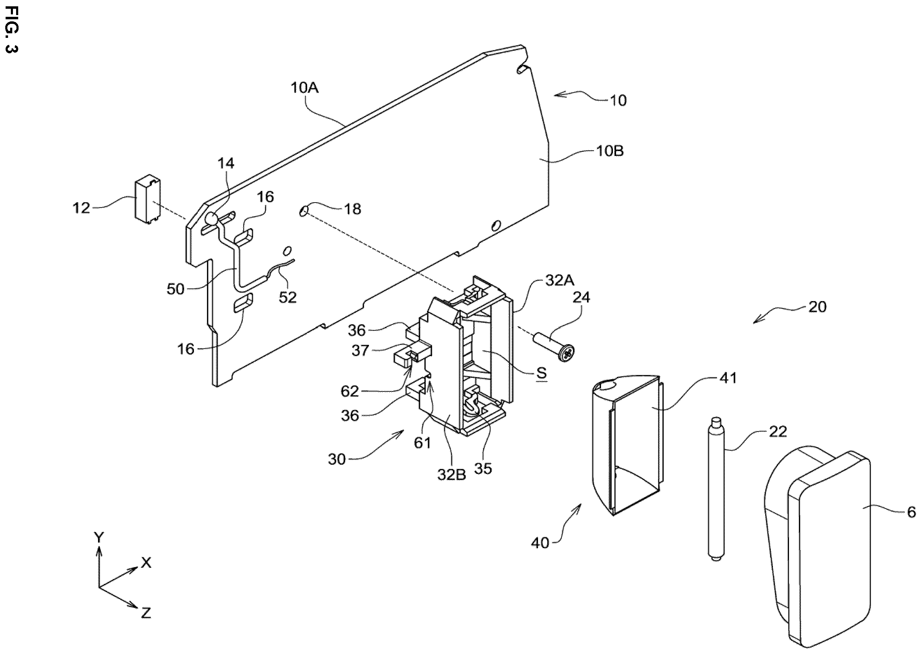

FIG. 2A is a schematic front view of the circuit board 10 and a light emitter unit 20 attached to the circuit board 10. FIG. 2B is a schematic plan view of the circuit board 10 and the light emitter unit 20. FIG. 2C is a schematic rear view of the circuit board 10 and the light emitter unit 20. FIG. 3 is an exploded perspective view of the circuit board 10, the light emitter unit 20, and the flash cover 6. In the present embodiment, for ease of explanation, the term front or frontward refers to the positive Z-direction in FIG. 3, and the term rear or rearward refers to the negative Z-direction in FIG. 3.

As shown in FIGs. 2A to 2C and FIG. 3, a trigger coil 12 as a trigger element is connected to pattern wiring (not shown) in the circuit board 10 on the rear surface 10A of the circuit board 10. The pattern wiring connected to the trigger coil 12 includes a contact 14 (refer to FIG. 3) on the front surface 10B of the circuit board 10. The contact 14 is connected to an end (first end) of a wire 50 by, for example, soldering. The wire 50 has a distal end 52 (second end) at which the covering is removed to expose the conductor.

The light emitter unit 20 includes a discharge tube 22 that can discharge electricity, such as a xenon tube, a housing 30 accommodating the discharge tube 22, and a conductive reflector 40 attached to the housing 30. For example, the reflector 40 is formed from stainless steel with high light reflectivity. The light emitter unit 20 is located behind the flash cover 6 on the front cover 2. Light generated by an electric discharge in the discharge tube 22 is emitted frontward from the camera 1 as flash light through the flash cover 6. For ease of understanding, wiring connected to both ends (both electrodes) of the discharge tube 22 is not shown.

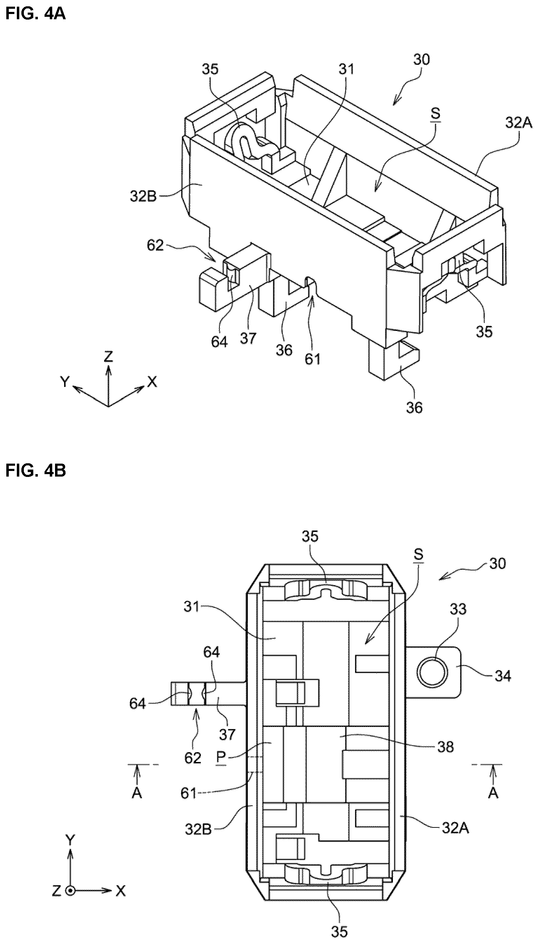

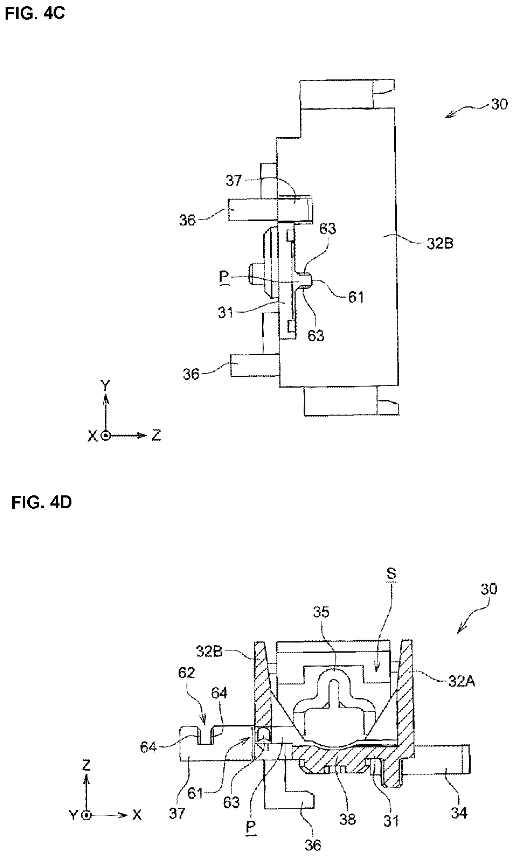

FIG. 4A is a perspective view of the housing 30. FIG. 4B is a front view of the housing 30. FIG. 4C is a left side view of the housing 30. FIG. 4D is a cross-sectional view taken along line A-A in FIG. 4B. The housing 30 includes a base 31 located on the circuit board 10, sidewalls 32A and 32B extending perpendicular (in the positive Z-direction) to the circuit board 10 from both ends of the base 31 in the X-direction, a fixing part 34 extending from the sidewall 32A in the positive X-direction and having an insertion hole 33, bends 35 located at both ends of the base 31 in the positive Y-direction and the negative Y-direction, two hooks 36 on the rear surface of the base 31, and an extension 37 extending from the sidewall 32B in the negative X-direction. The space surrounded by the base 31, the sidewalls 32A and 32B, and the bends 35 in the housing 30 is a housing space S accommodating the discharge tube 22 and the reflector 40.

The hooks 36 engage with the rear surface 10A of the circuit board 10 through elongated holes 16 (refer to FIG. 3) in the circuit board 10 (refer to FIG. 2C). The insertion hole 33 in the fixing part 34 receives a fastening screw 24 (refer to FIG. 3), which is screwed into a threaded hole 18 (refer to FIG. 3) in the circuit board 10. This fastens the housing 30 to the circuit board 10.

Both ends of the discharge tube 22 are located in the negative Z-direction from the bends 35. The bends 35 elastically press both ends of the discharge tube 22 in the negative Z-direction. As described above, in the present embodiment, the bends 35 in the housing 30 serve as urging portions elastically urging the discharge tube 22 toward the circuit board 10.

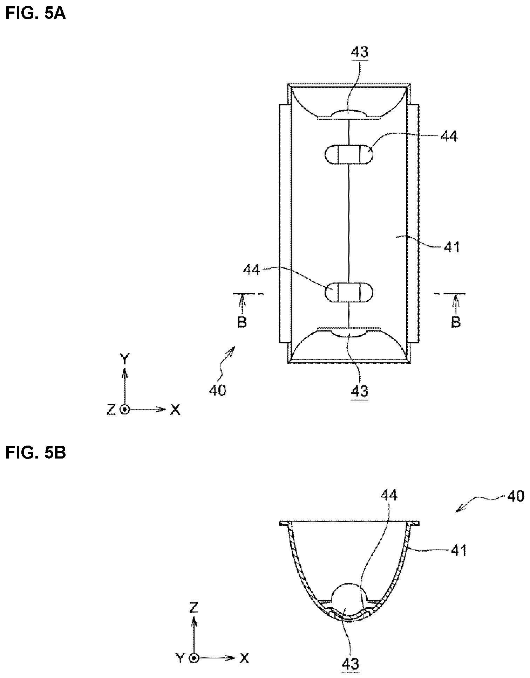

FIG. 5A is a front view of the reflector 40. FIG. 5B is a cross-sectional view taken along line B-B in FIG. 5A. As shown in FIGs. 5A and 5B, the reflector 40 includes a reflective portion 41 located in the housing space S of the housing 30. The reflective portion 41 has holes 43 receiving the discharge tube 22 in both surfaces in the Y-direction. The reflective portion 41 also has a curved surface surrounding the discharge tube 22. This curved surface has two supports 44 supporting the discharge tube 22 from the negative Z-direction.

Referring back to FIG. 4D, the housing 30 has a receiving portion 38 at the center of the base 31. The receiving portion 38 is curved along the curved surface of the reflective portion 41 of the reflector 40. The receiving portion 38 receives the reflector 40 accommodated in the housing space S of the housing 30.

In this structure, the bends 35 in the housing 30 urge the discharge tube 22 in the negative Z-direction, or more specifically, toward the circuit board 10. The discharge tube 22 urged toward the circuit board 10 by the bends 35 in the housing 30 presses the supports 44 in the reflector 40 toward the circuit board 10. Thus, the reflective portion 41 of the reflector 40 is pressed against the receiving portion 38 of the housing 30, with the reflector 40 fixed to the housing 30. In this manner, the reflector 40 in the present embodiment is urged toward the housing 30 and fixed to the housing 30.

As shown in FIG. 4A, the sidewall 32B of the housing 30 has a cutout 61 receiving the wire 50. The width of the cutout 61 in the Y-direction is about the same as the outer diameter of the wire 50 (outer diameter including the wire covering). Thus, the wire 50 received in the cutout 61 is held in the cutout 61. As shown in FIG. 4C, the inner surfaces of the cutout 61 facing each other have protrusions 63 protruding in the Z-direction. Such protrusions 63 engage into the covering of the wire 50 held in the cutout 61, reliably holding the wire 50 in the cutout 61.

As shown in FIG. 4A, the extension 37 on the housing 30 also has a cutout 62 receiving the wire 50. The width of the cutout 62 in the X-direction is about the same as the outer diameter of the wire 50 (outer diameter including the wire covering). Thus, the wire 50 received in the cutout 62 is held in the cutout 62. As shown in FIG. 4B, the inner surfaces of the cutout 62 facing each other have protrusions 64 protruding in the X-direction. Such protrusions 64 engage into the covering of the wire 50 held in the cutout 62, reliably holding the wire 50 in the cutout 62.

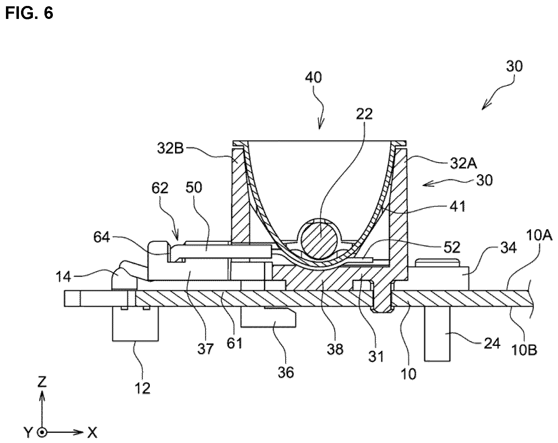

FIG. 6 is a partial cross-cross-sectional view of the circuit board 10 and the light emitter unit 20. As described above, the reflector 40 is urged in the negative Z-direction by the discharge tube 22 urged in the negative Z-direction by the bends 35 in the housing 30. Thus, as shown in FIG. 6, the distal end 52 of the wire 50 held in the cutout 61 in the sidewall 32B of the housing 30 is placed in position between the reflector 40 and the receiving portion 38 of the housing 30. The wire 50 with the covering removed at the distal end 52 has the exposed conductor electrically connected to the reflector 40, which is connected to the trigger coil 12 with the wire 50. Thus, in the present embodiment, the cutout 61 in the sidewall 32B of the housing 30 serves as a (first) holder guiding the wire 50 into the housing space S of the housing 30 and holding the wire 50 to have the distal end 52 of the wire 50 with the exposed conductor held between the reflector 40 and the receiving portion 38.

In the present embodiment, as shown in FIGs. 4B, 4C, and 4D, the housing 30 has an opening P adjacent to the cutout 61 in the sidewall 32B. The opening P extends between the sidewall 32B and the receiving portion 38. The position of the distal end 52 of the wire 50 can be adjusted through the opening P when the wire 50 is placed in the housing space S of the housing 30.

The cutout 62 in the extension 37 on the housing 30 serves as a (second) holder holding the wire 50 between the end connected to the contact 14 on the circuit board 10 and the portion of the wire 50 held in the cutout 61. Thus, the wire 50 held by the cutout 62 in the extension 37 in addition to the cutout 61 in the sidewall 32B of the housing 30 can be held more stably.

Materials such as stainless steel have less solderability. Thus, the reflector 40 formed from stainless steel as described above is difficult to be soldered directly to the wire 50. The wire may be soldered to another component such as a conductive plate, which may then be placed into contact with the reflector 40 to connect the reflector to the trigger coil 12. However, such a method connecting the wire to the reflector 40 using a separately prepared conductive plate can complicate the circuit configuration and uses a space for the conductive plate, increasing the size of the light emitter unit 20.

In response to this, in the present embodiment, the distal end 52 of the wire 50 with the exposed conductor is held between the reflector 40 and the receiving portion 38 of the housing 30. This can connect the reflector 40 to the trigger coil 12 without additional components such as a conductive plate. Thus, the reflector 40 can be used as a trigger electrode without additional components such as a conductive plate. The resulting camera 1 includes fewer components and a smaller space for emitting light using the discharge tube 22 and thus can be compact with a simple structure.

As described above, the camera according to one aspect of the present invention with a simple and compact structure can emit light using the discharge tube. More specifically, the camera according to one or more embodiments of the present invention may have the structures described below.

### First Structure

A camera includes a circuit board including a contact connected to a trigger element, a discharge tube that discharges electricity, a housing accommodating the discharge tube, a reflector being conductive and urged toward the housing and attached to the housing, and a wire having a first end electrically connected to the contact on the circuit board and a second end with an exposed conductor. The housing is attached to the circuit board. The housing includes a receiving portion receiving the reflector, and a sidewall located lateral to the receiving portion and extending perpendicular to the circuit board. The sidewall of the housing includes a first holder guiding the wire inside the housing and holding the wire to have the second end of the wire held between the reflector and the receiving portion.

In this structure, the wire is held with the second end of the wire having the exposed conductor held between the conductive reflector and the receiving portion of the housing. The conductor of the wire and the reflector can thus be electrically connected directly. This allows the reflector to be used as a trigger electrode without using other components such as a conductive plate. The camera thus includes fewer components and a smaller space for emitting light using the discharge tube and can be compact with a simple structure.

### Second Structure

In the first structure, the housing may have an opening adjacent to the first holder in the sidewall. The opening may extend between the sidewall and the receiving portion. The position of the second end of the wire can be adjusted through the opening when the wire is placed inside the housing.

### Third Structure

In the first or second structure, the housing may include a second holder holding the wire between the first end and a portion of the wire held by the first holder. The wire held by the second holder in addition to the first holder can be held more stably.

### Fourth Structure

In any one of the first to third structures, the housing may include an urging portion elastically urging the discharge tube toward the circuit board. The reflector may include a reflective portion. The reflective portion may include a support supporting the discharge tube between the circuit board and the discharge tube. In this structure, the urging portion in the housing urges the discharge tube toward the circuit board. The discharge tube urged toward the circuit board presses the support in the reflector toward the circuit board. This fixes the reflector to the housing.

Although one or more embodiments of the present invention have been described above, the present invention is not limited to the above embodiments and may be modified variously within the scope of its technical idea.

This application claims priority to Japanese Patent Application No. 2022-130266 filed on August 17, 2022, the entire disclosure of which is incorporated herein by reference.

### INDUSTRIAL APPLICABILITY

The technique according to one or more embodiments of the present invention is suitably used for cameras and relevant devices that emit light using an electric discharge in a discharge tube as a source of light.

### Reference Signs List

- 1: camera
- 2: front cover
- 3: rear cover
- 4: top cover
- 6: flash cover
- 10: circuit board
- 12: trigger coil
- 14: contact
- 16: elongated hole
- 18: threaded hole
- 20: light emitter unit
- 22: discharge tube
- 24: fastening screw
- 30: housing
- 31: base
- 32A, 32B: sidewall
- 33: insertion hole
- 34: fixing part
- 35: bend
- 36: hook
- 37: extension
- 38: receiving portion
- 40: reflector
- 41: reflective portion
- 44: support
- 50: wire
- 52: distal end (second end)
- 61: cutout (first holder)
- 62: cutout (second holder)
- 63, 64: protrusion
- P: opening
- S: housing space

## Claims

1. A camera, comprising:
a circuit board including a contact connected to a trigger element;
a discharge tube configured to discharge electricity;
a housing accommodating the discharge tube, the housing being attached to the circuit board;
a reflector being conductive, the reflector being urged toward the housing and attached to the housing; and
a wire having a first end electrically connected to the contact on the circuit board and a second end with an exposed conductor,
wherein the housing includes
a receiving portion receiving the reflector, and
a sidewall located lateral to the receiving portion and extending perpendicular to the circuit board, and
the sidewall of the housing includes a first holder guiding the wire inside the housing and holding the wire to have the second end of the wire held between the reflector and the receiving portion.

2. The camera according to claim 1, wherein
the housing has an opening adjacent to the first holder in the sidewall, and the opening extends between the sidewall and the receiving portion.

3. The camera according to claim 1, wherein
the housing includes a second holder holding the wire between the first end and a portion of the wire held by the first holder.

4. The camera according to claim 1, wherein
the housing includes an urging portion elastically urging the discharge tube toward the circuit board, and
the reflector includes a reflective portion, and the reflective portion includes a support supporting the discharge tube between the circuit board and the discharge tube.
